# EUROPEAN PATENT APPLICATION

(11) **EP 1 034 694 A1**
(43) Date of publication of application: **13.09.2000**
(21) Application number: 00830159.0
(22) Date of filing: 02.03.2000
(51) Int. Cl.: A01D 46/26

(54) **Olive harvester for installation on tractors**

(30) Priority: 05.03.1999 IT PG990016
(71) Applicant: Angelucci, Pina, Bevagna (PG) (IT); Selleri, Giuseppa, Torre del Colle-Bevagna(PG) (IT)
(72) Inventor: Angelucci, Pina, Bevagna (PG) (IT); Selleri, Giuseppa, Torre del Colle-Bevagna(PG) (IT)
(74) Representative: Baldi, Claudio

(57) **Abstract**

The present invention relates to an olive harvester for installation on tractors made up of a metal frame comprising a long vertical grilled wall (1) frontally provided with a grilled base (2) covered with a very fine-mesh net that covers also the front of the vertical grilled wall.

## Description

The present patent application relates to an olive harvester for installation on tractors, which can be easily moved from one tree to another one and comfortably positioned under the tree.

According to the usual technique, olives are harvested by means of special fine-mesh nets that are manually laid around the trunk of the olive tree in order to cover the entire area under the tree foliage.

The olives fall off the branches onto the ground and fall on the net. The net is folded and closed manually in order to collect all the olives that are then placed in crates or big sacks.

The use of this special net for olive harvesting has several disadvantages.

First of all, great time and effort are necessary to move the net from one tree to another one and to lay it under each tree, since several workers are needed to carry out these operations by hand.

When the amount of olives is not very large, the half-empty net is dragged under another tree until the net is completely full and ready to be emptied.

While dragging the net, the olives on the net get damaged and dirty with mud if the ground is wet.

When the land is particularly steep, the olives start rolling down and get out of the net, which becomes completely useless.

The purpose of the present invention is to eliminate all the aforesaid disadvantages by means of a support structure for the net to be installed on tractors. This allows for moving from one tree to another one with the tractor, without laying the net on the ground.

Another purpose of the invention is to realise a support structure for the net, capable of making the passage of the olives from the net to the crates or sacks easier and faster. The equipment according to the invention comprises a metal frame for installation on tractors and capable of oscillating. The frame is made up of a long vertical grilled wall frontally provided with a grilled base covered with a very fine-mesh net that also covers the front of the vertical grilled wall.

For major clarity the description of the invention continues with reference to the enclosed drawings, which are intended for purposes of illustration and not in a limiting sense, whereby:
- Figure 1 is a three-quarter front view of a tractor provided with the equipment according to the invention in horizontal position in contact with the ground;
- Figure 2 is a side view of the same tractor provided with the equipment according to the invention in raised and tilted position;
- Figure 3 is the same as figure 1, with the equipment installed on a scraper.

With reference to the aforesaid figures, the equipment according to the invention comprises a special metal frame for installation on tractors, capable of oscillating.

More precisely, the metal frame is made up of a long grilled wall (1) frontally provided with a grilled base (2) with the same length as the wall (1) fixed onto the lower longitudinal edge of the wall (1) and covered with a very fine-mesh net

In a preferred embodiment of the invention, the grilled base (2) is hinged to the lower longitudinal edge of the grilled wall (1). In this way the grilled base (2) can be translated from the horizontal operating position to a vertical position against the grilled wall (1) in order to reduce its volume during transportation or storage.

In this preferred embodiment of the invention, the horizontal operating position of the grilled base (2) is ensured by means of chains (2a) fixed between the front longitudinal edge of the base (2) and the bearing structure of the grilled wall (1).

Two arms (3a and 3b) - one for each longitudinal end of the grilled wall (1) - are fixed in coplanar position to the grilled base (2) on the rear of the grilled wall (1).

Frontally the grilled wall (1) is designed to be entirely covered with a fine-mesh net of the type normally used for olive harvesting. Two triangular sections of the net are fixed between the lateral vertical edges of the grilled wall (1) and the adjacent transversal horizontal edges of the grilled base (2), as side restraints.

Another section of the net is fixed onto the external longitudinal edge of the grilled base (2). The size of this section of the net allows for covering a vast portion of the ground in front of the grilled base (2).

Pairs of forks (4a and 4b) are fixed to each arm (3a and 3b) mounted on the back of the grilled wall (1). The forks (4a and 4b) protrude upwards and allow for installing the metal frame on the tractor.

As shown in the enclosed figures, the metal frame must be fixed so that the grilled wall (1) is arranged on the side of the tractor, in parallel position to the longitudinal axis of the tractor. The figures also show that the length of the grilled wall (1) is slightly higher than the length of the tractor, so that the support arms (3a and 3b) can be arranged in external position with respect to the front and the rear of the tractor.

In this perspective the first arm (3a) of the grilled wall (1) is fixed by means of the forks (4a) to the pair of liftable levers (L) that are always provided on the back of tractors in order to support and actuate tools for soil working (such as ploughs, harrows, silage harvesters, etc.)

The second arm (3b) is fixed by means of the forks (4b) to the ends of two long liftable arms that protrude on the front of the tractor.

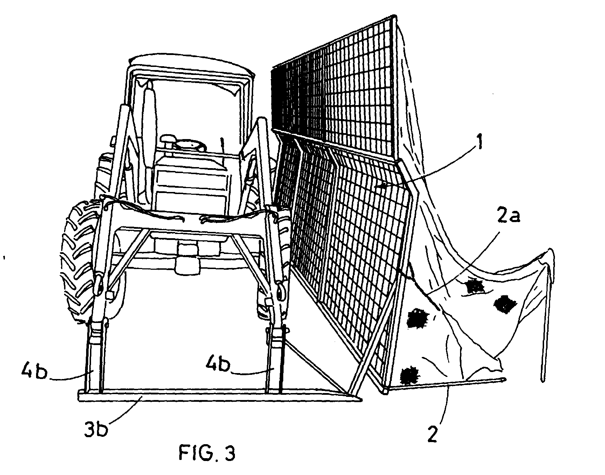

In the case of installation on scrapers, it will be necessary to disassemble the front bucket and fix the forks (4b) of the second arm (3b) to the ends of the arms normally used to support and lift the bucket, as shown in figure 3.

A specific support and lift device has been expressly conceived within the scope of the present invention to install the olive harvester on tractors.

The device comprises a pair of vertical rods (5) to be fixed on the sides of the tractor front, on which two long parallel arms (6) are pivoted, whose front ends lay in forward position with respect to the tractor front.

The two arms (6) are joined and stiffened by intermediate crosspieces (7). The crosspiece in rear position is also used to fix the end of the stem (8a) of a jack with vertical axis, whose liner (8b) is joined in the lower part to a plate (9) fixed in the centre of the tractor front.

As regards the operation of the device, it must be said that the tractor must be driven near the olive tree so that the grilled wall (1) can be placed near the tree, with the grilled base (2) facing the tree.

While moving, the grilled wall (1) must be kept at a certain height from the ground in order to avoid possible interference with it. To this end, the operator will lift the rear levers (L) and the front arms (6) as necessary, using the tractor commands.

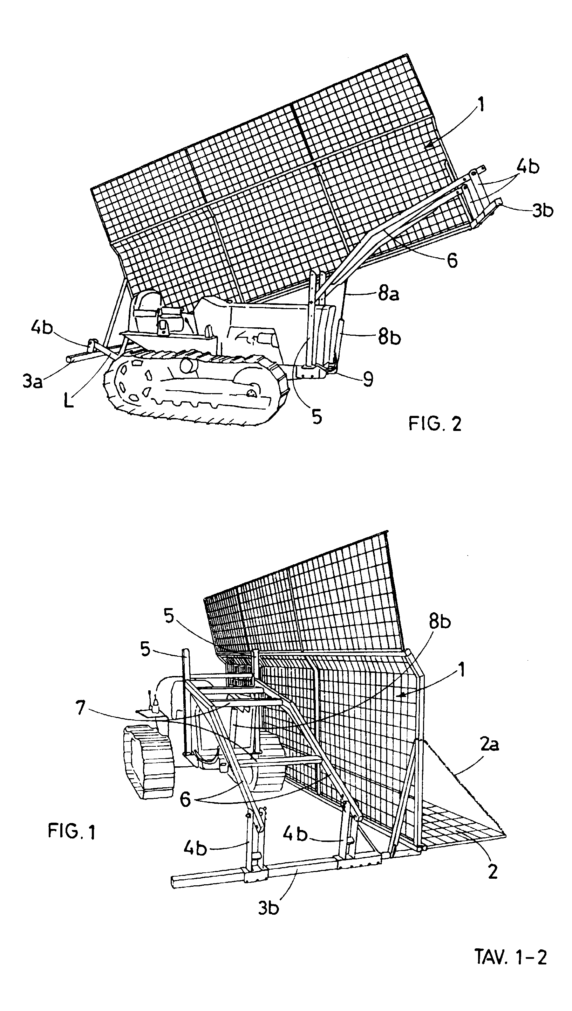

As soon as the tractor has reached the tree, the operator will simultaneously lower the rear levers (L) and the front arms (6) using the tractor commands, until the two bearing arms (3a and 3b) of the grilled wall (1) - and also the entire grilled base (2) - are laid on the ground (see the enclosed figures 1 and 3).

The next operation consists in unfolding the net section fixed on the front of the grilled base (2). This section of the net is designed to surround the tree trunk, thus completely covering a surface that approximately corresponds to the tree foliage.

Olive harvesting can now be carried out according to the traditional technique, i.e. the olives fall off the tree branches onto the nets that surround the tree trunk.

It must be said that the olives falling off the tree that interfere with the grilled wall (1) are advantageously caught by the net and immediately conveyed towards the horizontal grilled base (2) below.

To collect the olives that fell on the net under the tree foliage, it will only be necessary to lift the net to transfer all the olives to the horizontal grilled base (2) of the vertical grilled wall (1).

Now, the operator will use the tractor commands to lift the entire grilled wall (1) so that the grilled base (2) detaches from the ground in parallel position. Then it will be necessary to lift the front arms (5) of the tractor.

In this way the entire grilled wall (1) will assume a tilted position - as shown in figure 2 - with the vertical front edge at a higher height compared to the vertical rear edge. At the same time the grilled base (2) that is applied at the bottom of the grilled wall (1) will assume the position of a inclined plane inclined (in other words, a slide) capable of making the olives fall towards the rear end.

Now the operator will place sacks or crates near the rear edge of the grilled base (2) in order to transfer all the olives collected on the grilled base inside the containers.

In this perspective it appears evident that the great technical-functional advantage of the device according to the invention lies in the fact that it will no longer be necessary to pick the olives from the net and transfer them inside the containers by hand.

The advantages of the device according to the invention appear evident from the description above. In particular, the advantages are as follows:
- it allows for quick transfer from one tree to another one in about 1/3 of the time required by the traditional method;
- it avoids dragging the net and the olives; the olives do not get dirty or wet because of the wet ground and the net does not get damaged during dragging, thus saving on money;
- it allows for saving on the labour needed for harvesting, since the workers in charge of arranging the nets and the olives can now be entrusted with different tasks;
- it is particularly useful in case of spread out olive trees because of the quick transfer; it has a reduced volume since the base can be closed only when necessary;
- it allows for mechanical dumping: the olives are transported with the tractor and lifted from the ground without being dragged; for a quantity of about 400/600 kilos, dumping will only have to be done once, while the traditional system requires about 20 dumping operations;
- the fixed part of the mechanical mobile net for olive harvesting allows for getting closer to the tree and, especially on steep slopes, it avoids fixing the traditional net with poles with a considerable loss of time, since the elevators allows for getting close to trees in terraced olive groves;
- it allows for collecting the olives that would start rolling and would get lost due to the irregularity of the ground;
- it works as a protection barrier for the workers on the ladders on the steeper side since they can hold on to it;
- the mechanical mobile net for olive harvesting can be used by one or more persons at the same time;
- it allows for a total production in olive harvesting about 50% higher than the traditional system.

## Claims

1. Olive harvester for installation on tractors, characterised in that it is made up of a grilled wall (1) frontally provided with a horizontal grilled base (2) with the same length as the wall (1) covered by a very fine-mesh net, to which, two arms (3a and 3b) are fixed in coplanar position on the rear of the grilled wall (1), one for each longitudinal end of the wall (1), provided with pairs of forks (4a and 4b) protruding upwards, used to fix the arms (3a and 3b) to the pair of liftable levers (L) that are usually provided on the back of all tractors and to a pair of long liftable arms (6) that protrude on the front of the tractor; it being also provided that the grilled wall (1) is covered with a section of net and that a second section of the same net is fixed onto the front longitudinal edge of the grilled base (2).

2. Olive harvester according to claim 1 characterised in that the front arm (3b) of the grilled wall (1) is fixed to the end of the two longitudinal liftable arms usually provided on a scraper (after removing the bucket).

3. Olive harvester according to claim 1 characterised in that the front arm (3b) of the grilled wall (1) is fixed to the end of two parallel arms (6) pivoted to vertical rods (5) fixed to the sides of the tractor front and stiffened by means of a series of intermediate crosspieces (7), and the crosspiece which is closer to the front of the tractor is used to fix the end of the stem (8a) of a jack with vertical axis, whose liner (8b) is joined in the lower part to a plate (9) fixed in the centre of the tractor front.

4. Olive harvester according to claim 1 characterised in that the horizontal grilled base (2) is pivoted to the base of the grilled wall (1) and fixed to it by means of two chains (2a); it being provided that the grilled base (2) can be moved from the horizontal operating position to the vertical idle position next to the grilled wall (1).
